# EUROPEAN PATENT APPLICATION

(11) **EP 1 561 761 A1**
(43) Date of publication of application: **10.08.2005**
(21) Application number: 05001375.4
(22) Date of filing: 25.01.2005
(51) Int. Cl.: C08F 2/00, G05B 1/00, G05B 15/00, G05B 17/00, G05B 19/00, C08F 220/58

(54) **Method and apparatus for controlling a polymerization reaction**

(30) Priority: 03.02.2004 CA 2456482
(71) Applicant: Lanxess Inc., Sarnia, ON N7T M2 (CA)
(72) Inventor: Sadek, Ahmed, Pincourt Quebek, J7V 4G3 (CA)
(74) Representative: Zobel, Manfred, Dr.

(57) **Abstract**

A process for producing a polymer, such as a liquid binder. The process includes forming a polymerizing mixture in a reaction vessel from at least two reactants, monitoring the pH of the material in the reaction vessel and monitoring the viscosity of the polymerizing mixture to regulate the rate of polymerization of the mixture.

## Description

### FIELD OF THE INVENTION

The present invention relates to a method and an apparatus for controlling a polymerization reaction by monitoring the pH and the viscosity of the polymerizing mixture. In another aspect, the invention relates to an automated method for manufacturing a polymer on the basis of product selection information input by a customer.

### BACKGROUND OF THE INVENTION

Polymers such as liquid binders are normally manufactured by mixing in a reaction vessel two or more reactants that form a polymerizing mixture. Parameters of the polymerizing mixture are monitored to determine when the manufacturing process is completed. At this point, the binder is removed from the vessel and put in storage or immediately shipped to a customer. Since binders have a limited shelf life, in the order of several days to several weeks, they cannot be manufactured in very large batches for the purpose of long term storage.

Typical binder manufacturing processes are conducted largely under human supervision. This approach is not very cost effective since a human operator is always required to monitor the polymerization reaction. In addition, the reliance on a human operator introduces variability in the manufacturing process that translates into inconsistent product quality.

Against this background, a clear need exists in the industry to develop a process and an apparatus for automating the manufacturing of polymers, more particularly

### SUMMARY OF THE INVENTION

In a first broad aspect, the invention provides a process for producing a polymer such as liquid binder. The process includes:
- delivering at least two reactants in a reaction vessel capable to interact and produce a polymerizing mixture;
- monitoring the pH of material in the reaction vessel;
- monitoring the viscosity of the polymerizing mixture to regulate the rate of polymerization of the mixture.

The advantage of this approach resides in the ability to accurately determine how the polymerization reaction progresses such that corrective action can be taken in order to obtain the product with the desired characteristics, such as a predictable shelf life. In a specific example of implementation, one corrective action that can be taken is to add an inhibitor to slow down the reaction when the measured variation of viscosity versus time indicates that the rate of polymerization is too elevated.

In a second broad aspect, the invention provides an apparatus for producing a polymer. The apparatus has a reaction vessel for receiving at least two reactants to form a polymerizing mixture and an electronic controller. The electronic controller can monitor the pH of material in the reaction vessel and the viscosity of the polymerizing mixture to regulate the rate of polymerization of the polymerizing mixture.

Under a third broad aspect, the invention provides an electronic controller for controlling a polymerization reaction. The electronic controller has an input for receiving a signal conveying pH information of material in a reaction vessel and a signal conveying viscosity information indicative of the viscosity of a polymerizing mixture in the reaction vessel. A processing unit processes the viscosity information to determine if the rate of polymerization of the polymerizing mixture should be altered. The electronic controller also has an output for releasing a signal for causing a regulating action to be performed that is susceptible to alter the rate of polymerization of the polymerizing mixture. In a non-limiting example of implementation the regulating action includes the delivery to the polymerizing mixture of an agent susceptible to alter the rate of the polymerization reaction. In a possible variant, the regulating action can be to produce a change of the temperature of the polymerizing mixture.

Under a fourth broad aspect, the invention provides a computer readable storage medium containing a program element for execution by a computing apparatus having a processing unit in communication with an output. The computing apparatus when executing the program element obtains pH information from material in a reaction vessel and viscosity information indicative of the viscosity of a polymerizing mixture in the reaction vessel, and determines if the rate of polymerization of the polymerizing mixture should be altered at least in part on the basis of the viscosity information. The computing apparatus can direct the output to cause a regulating action to be performed that is susceptible to alter the rate of polymerization of the polymerizing mixture. As indicated previously, the regulating action can include the delivery to the polymerizing mixture of an agent susceptible to alter the rate of the polymerization reaction, producing a change of the temperature of the polymerizing mixture, among others.

Under a fifth broad aspect, the invention also provides a method for manufacturing a polymer on the basis of product selection information input by a customer. The method includes displaying on a client system information prompting a user to enter at the client system a purchase order, the purchase order including product selection information indicative of a polymer the user desires to purchase;
a) electronically transmitting the product selection information to a server remotely located from the client system;
b) electronically supplying to an automated polymer manufacturing apparatus control information derived from the product selection information to direct the apparatus to manufacture a controlled amount of the polymer the user desires to purchase by mixing at least two reactants to form a polymerizing mixture.

### BRIEF DESCRIPTION OF THE DRAWINGS

A detailed description of examples of implementation of the present invention is provided hereinbelow with reference to the following drawings, in which:
Figure 1 is a schematical view of the apparatus for automatically producing a polymer such as liquid binder, in accordance with an example of implementation of the invention;
Figure 2 is a flowchart illustrating the process implemented by the apparatus shown in Figure 1;
Figure 3 is a block diagram of the electronic controller regulating the operation of the apparatus shown in Figure 1;
Figure 4 illustrates a system for automatically manufacturing a polymer on the basis of product selection information input by a customer, including a client system, a server and a communications network.

In the drawings, embodiments of the invention are illustrated by way of example. Therefore, it is to be expressly understood that the description and drawings are only for purposes of illustration and as an aid to understanding, and are not intended to be a definition of the limits of the invention.

### DETAILED DESCRIPTION

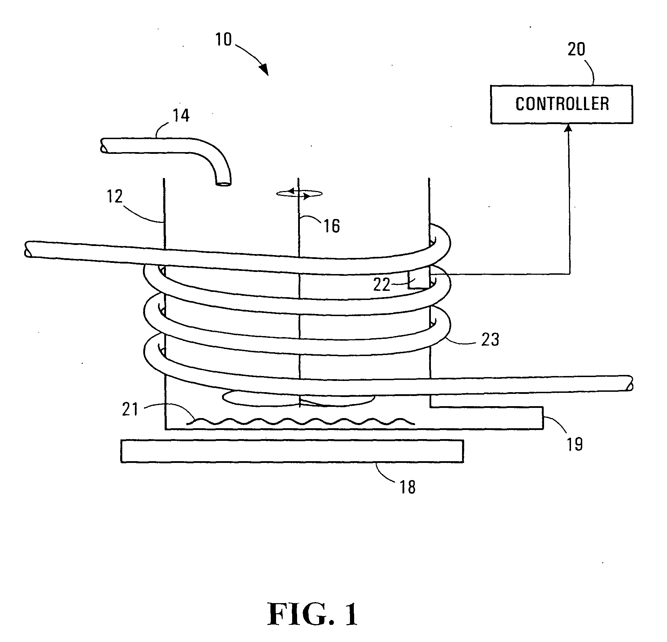

Figure 1 illustrates in a schematic form an apparatus for manufacturing polymer, such as a liquid binder in accordance with a non-limiting example of implementation of the present invention. Although the following description will be made in the context of liquid binder manufacture, it should be expressly noted that the invention is not limited to this feature and the apparatus and method can be used to produce other types of polymers.

The apparatus 10 includes a reaction vessel 12 that can be of any suitable dimension depending on the desired batch size capability of the apparatus. A material supply 14 is provided above the vessel 12 to introduce the various materials therein necessary for the polymerization reaction. It should be noted that the material supply 14 is intended to collectively designate a series of delivery nozzles(not shown) each being in fluid communication with a respective tank of material that is used during the operation of the apparatus 10. The flow of material from the tanks to the respective nozzles is controlled by respective valves, of a type generally known in the art.

A mixing device 16 is mounted in the reaction vessel 12 to agitate the mixture therein such as to maintain its homogeneity.

The entire reaction vessel 12 is mounted on a weighing sensor 18, of a type known in the art that produces an output signal containing information about the weight of material in the reaction vessel 12.

Near the bottom of the vessel 12 is provided a discharge outlet 19, controlled by a suitable valve (not shown), to release the batch of liquid binder when the process for its preparation is completed. Typically, the discharge outlet 19 leads to a storage tank.

The apparatus 10 also includes provisions to heat the reaction vessel 12 and, accordingly the contents of the reaction vessel 12. The heating system 21 can be of any suitable type, without departing from the spirit of the invention. Optionally, the apparatus 10 is provided with a cooling system 23 designed to lower the temperature of the material in the reaction vessel 12. For example, the cooling system 23 may comprise a series of conduits in contact with the reaction vessel 12. By flowing a cold fluid in the conduits, the temperature of the material in the reaction vessel 12 will be lowered. As it will be discussed in greater detail later, the heating system 21 and the cooling system 23 can be used to adjust the temperature of the polymerizing mixture in the reaction vessel such as to increase or decrease the rate of polymerization.

The operation of the apparatus 10 is controlled by an electronic controller 20. The electronic controller 20 receives information on process conditions from a plurality of primary sensors that are collectively designated by 22 and also from secondary sensors. In a non-limiting example of implementation, the following sensors are used:
1. Viscosity sensor to observe the viscosity of material in the reaction vessel (primary sensor). A sensor manufactured by the Norcross Corporation in Newton, Maryland, USA has been found satisfactory. The sensor is a modified version of the unit commercialized by this company under the trade designation "M8B". The modification resides in the provision of longer measuring tubes that allow locating the measuring cup of the sensor deeply within the reaction vessel 12 such as to obtain more accurate measurements. The configuration of the reaction vessel determines the necessity for longer measuring tubes; shallower reaction vessels may not require longer measuring tubes. In the case longer measuring tubes are used it is advantageous to provide a support structure, in the form of brackets, for the measuring tubes such that they will remain substantially vertical in the reaction vessel 12 and avoid being tossed around as a result of the movement of material in the reaction vessel 12 that is being agitated by the mixing device 16.
2. pH sensor of a type known in the art to observe the pH of the material in the reaction vessel (primary sensor);
3. The weighing sensor 18 of a type known in the art (secondary sensor);
4. Other secondary sensors not described in detail such as temperature sensors, sensors measuring the level of material in the reaction vessel 12, among others.

The electronic controller 20 executes a program that controls the operation of the apparatus 10 on the basis of the information received from the various sensors. That information is processed by the program which generates control signals regulating the delivery of reactants in the reaction vessel 12 and other materials, and takes any other appropriate regulation action such that the polymerization reaction will evolve as planned.

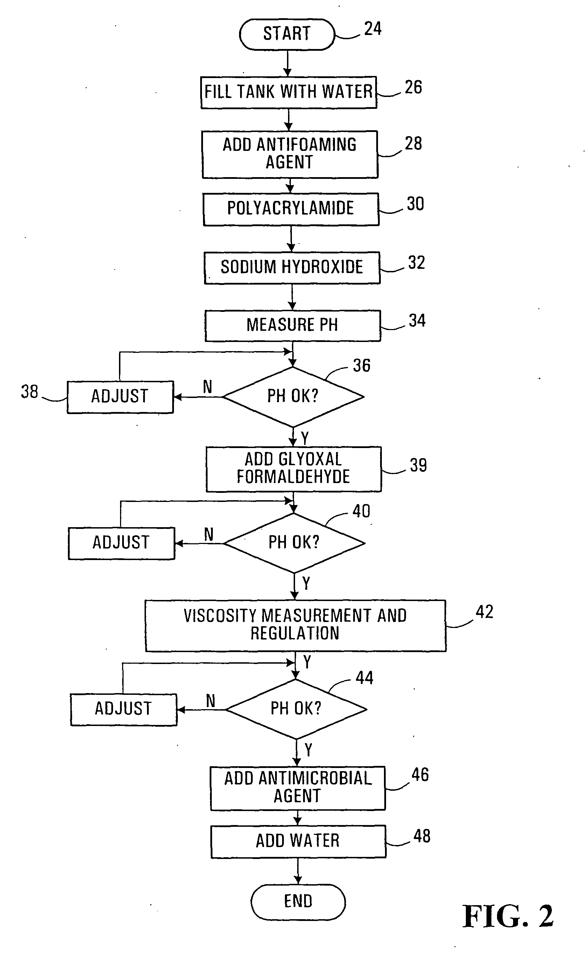

Figure 2 illustrates a flowchart of the process implemented by the apparatus 10 which is a reflection of the logic of the program executed by electronic controller 20.

At step 24 the process starts. The electronic controller 20 will perform a self-diagnostic test and if no problems are noted it will go to step 26 where it issues a control signal to the material supply 14 to deliver water in the reaction vessel 12. The water is delivered at a controlled temperature of 24 degrees Celsius. The electronic controller 20 observes the output of the weighing sensor 18 to determine the amount of water that is being discharged in the reaction vessel 12. When the desired quantity is reached, the electronic controller 20 shuts off the water flow. After a stabilization period during which the electronic controller 20 observes the water temperature to confirm it is at 24 degrees Celsius, it initiates step 28. At step 28 the electronic controller 20 issues a control signal to the material supply 14 to deliver a controlled amount of antifoaming agent. In a non-limiting example of implementation, the antifoaming agent is a silicon emulsion commercialized by Bayer under the trade name "SAG-10". After a stabilization period, the electronic controller 20 initiates step 30 at which it issues a control signal to the material supply 14 to add in the reaction vessel 12 a controlled amount of polyacrylamide, such as polyacrylamide commercialized by Bayer under the trade name "Paper Product 2601". At step 32, the electronic controller 20 issues another control signal to the material supply 14 to deliver in the reaction vessel 12 a controlled amount of sodium hydroxide diluted in water at 50% concentration.

During the entire process the mixing device 16 is operated either continuously or intermittently to keep the material in the reaction vessel 12 homogeneous.

At step 34 the electronic controller 20 reads the output of the pH sensor to determine the pH of the material in the reaction vessel 12. The pH information received from the pH sensor is compared at step 36 to a predetermined acceptable pH range of 10.0 to 10.2. If the pH is outside the acceptable range the program branches to step 38 where a corrective action is taken to alter the pH. If the pH is above 10.2 the electronic controller 20 will compute an amount of acid to be added to the reaction vessel 12 to lower the pH as required. The electronic controller 20 will issue control signals to the material supply 14 to cause the material supply 14 to deliver in the reaction vessel 12 the calculated amount of acid. In a specific example of implementation, the acid is in the form of a solution of sulfuric acid and water at 12% concentration that is delivered in two successive portions, the addition of each portion followed by agitation and a stabilization period. The pH of the material in the reaction vessel 12 is measured again and if this time the pH is within the range of 10.0 to 10.2 the process continues to step 39.

In the case where the pH is below 10.0 the electronic controller 20 will compute an amount of base to be added to the material in the reaction vessel 12 to adjust the pH as is required. In a specific example, the base is a solution of sodium hydroxide and water at 50% concentration. The amount of base computed by the electronic controller 20 is added to the reaction vessel 12 in two consecutive parts, the addition of each part followed by agitation and stabilization. The pH is measured again and if it is still outside the range of 10.0 to 10.2 acid or base is added as required until the pH is brought within the desired range.

Next, the process continues at step 39 where glyoxal formaldehyde compound is added to the reaction vessel. Glyoxal formaldehyde is available from Bayer under the trade name "Freechem 40DF". As previously described, the electronic controller 20 issues the necessary control signals to the material supply 14 to deliver a controlled amount of glyoxal formaldehyde in the reaction vessel 12. At this point, the polymerization reaction starts.

At step 40, the next step of the process, the pH of the material in the reaction vessel is assessed again. If the pH is within the range of 8.6 to 8.8 no corrective measure is taken. Otherwise the pH of the material is altered in the following manner. If the pH is above 8.8 but not exceeding 8.9 the electronic controller 20 computes an amount of acid to add to the material in the reaction vessel 12. In a specific example of implementation the acid is a solution of sulfuric acid and water at 12% concentration. The selected amount of acid solution to be added is delivered in two parts followed by agitation and a stabilization period. The pH is measured again and if it is within the predetermined range the process continues to step 42.

If the pH measured at step 40 is below 8.6 the electronic controller 20 computes an amount of base to add to the material in the reaction vessel 12. In a specific example of implementation the base is sodium carbonate. The amount of base to be added is delivered in successive two parts followed by agitation and a stabilization period. The pH is measured again and if it is within the predetermined range the process continues to step 42.

If the pH measured at step 40 is at or above 8.9 the electronic controller 20 will compute an amount of acid to be added, such as a solution of water and sulfuric acid at 12% concentration and an alarm condition is raised. At this point the process is no longer under automatic control and requires the intervention of a human operator.

At step 42 the viscosity measurement of the polymerizing mixture is performed. Viscosity is measured directly in the reaction vessel 12 with direct contact of the product. Specifically, the control logic continuously observes the viscosity measurement values that are generated by the viscosity sensor. As the polymerization reaction progresses, the viscosity sensor will output progressively increasing viscosity values. When a first predetermined set point is reached, the control logic implements a first regulating action to slow down the polymerization rate. In a specific and non limiting example of implementation the regulating action involves the introduction of an agent in the reaction vessel 12 susceptible to slow down the rate of polymerization. A wide variety of agents can be used without departing from the spirit of the invention. In a specific example the speed of polymerization is retarded by the addition of predetermined amount of a solution of sulfuric acid and water at 12% concentration. In a possible variant, the regulating action includes activation of the cooling system 23 to reduce the temperature of the polymerizing mixture, or a combination of both.

Following the implementation of the first regulating action, the control logic continues to observe the viscosity values generated by the viscosity sensor. When a second predetermined set point is reached, a second regulating action is performed to further slow down the polymerization rate. As is the case with the first regulating action, the rate of polymerization can be reduced by delivering to the polymerizing mixture au inhibitor such as a predetermined amount of a solution of sulfuric acid and water at 12% concentration, activating the cooling system 23 or a combination of both.

The specific set points at which the respective regulating actions are implemented are process parameters that can vary widely with the intended application. One way to determine what are the optimal set points is via simple testing during which various set point are tried and the pair that provides the best result is selected.

It should be expressly noted that more than two or less than two set points can be suitable for certain applications without departing from the spirit of the invention.

In a possible variant, the control logic measures the time from the moment the first set point is reached. If a predetermined amount of time elapses before the second set point is reached, the control logic determines that the polymerization rate is too low and invokes a regulating action to increase the polymerization rate. This can be done in various ways such as by introducing an agent in the reaction vessel 12 that will accelerate the polymerization reactions, activation of the heating system 21, or a combination of both.

Under this variant, the control logic is actually assessing the rate at which the viscosity of the polymerizing mixture changes. If this rate is determined to be too low, a regulating action is implemented.

At step 44 the pH of polymerizing mixture is again measured and corrected if outside the range of 2.7 to 2.9. The correction is made as described earlier by adding a solution of sulfuric acid and water at a 12% concentration to lower the pH and sodium carbonate to raise the pH.

At step 46 the electronic controller 18 computes an amount of antimicrobial agent, such as methylene BIS thiocyanate commercialized by BAYER under the trade name "AMA" and sends the necessary control signals to the material supply 14 to deliver this product to the reaction vessel 12. At step 48 a controlled amount of water is added in the reaction vessel 12 and the product is blended for a predetermined amount of time by the mixing device 16. At this point the process is completed. The finished product is discharged from the reaction vessel 12 via the discharge outlet 19. More particularly, the electronic controller 20 issues the necessary control signals that will open the valve in the discharge outlet 19 to allow the finished product to flow through it. Alternatively, the removal of the finished product can be performed by any suitable pump arrangement, instead of using gravity.

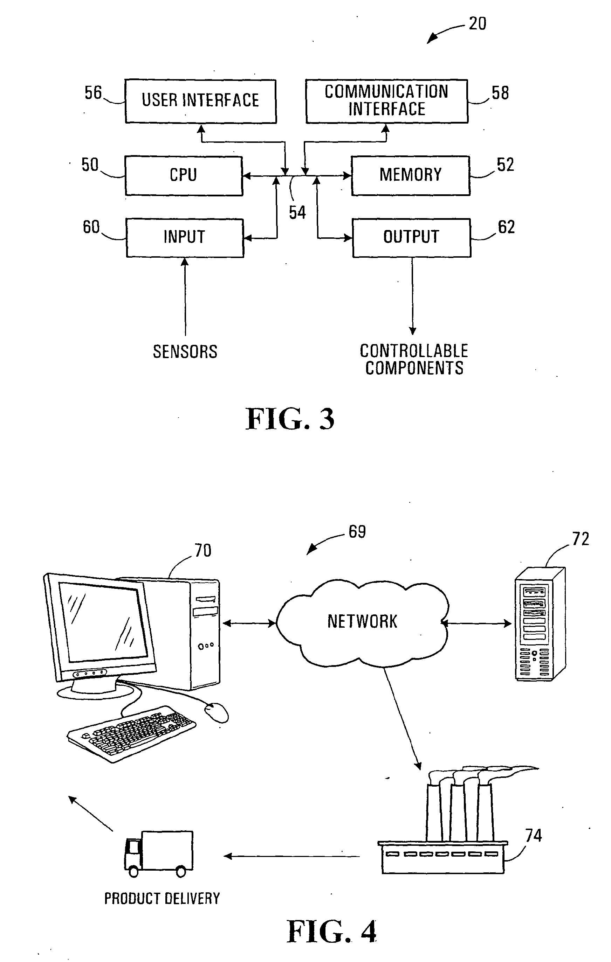

Figure 3 is a block diagram of the electronic controller 20. The electronic controller 20 has a Central Processing Unit (CPU) 50 communicating with a memory 52 via a data bus 54. Although the memory 52 is shown as a single element, it should be clearly understood that other memory configurations are possible without departing from the spirit of the invention, where the memory 52 is formed by a series of independent memory units that are physically separate from one another. The memory 52 holds a program element that is executed by the CPU 50 to implement the desired control logic during the operation of the apparatus 10. Advantageously, the portion of the memory 52 holding the program element is non-volatile, such as to retain the program element even when no electrical power is being supplied to the electronic controller 18. The memory 52 also contains a random access portion in which data obtained from the various sensors is written therein such that it can be processed by the CPU 50.

A user interface 56 communicates with the data bus 54. The user interface includes controls allowing a human operator to enter commands. In addition, the user interface includes some type of display, such as a display screen via which the electronic controller 18 delivers information to the human operator.

The electronic controller 20 also includes a communication interface 58 that allows the electronic controller 20 to communicate with a remote entity. In a specific example of implementation, the communication interface 58 allows connecting the electronic controller 20 to a network, such as a Local Area Network (LAN), Wide Area Network (WAN), or the public Internet. The communication interface 58 allows the electronic controller 20 to receive control information from a remote entity via the network, such as commands to start the process or process parameters that define precisely the type of polymer to be manufactured. Such process parameters could explicitly state the formulation of the polymer to be manufactured, such as the proportions of the various constituent elements, the quantity of polymer to be manufactured, the different pH ranges to be enforced, the viscosity set points, etc. Alternatively, the process parameters could be presented in the form of an index or identifier that the CPU 50 uses to locate a specific entry in a table held in the memory 52 containing the precise formulation information, the different pH ranges to be enforced, the viscosity set points, etc.

The communication interface 58 can also be used by the electronic controller 20 to notify the remote entity of significant events, such as when the production of a batch has been completed or of various alarm conditions that may arise.

The communication interface 58 communicates with the remote entity via any suitable protocol, of a type that is known in the art.

The electronic controller 20 further includes a set of interfaces collectively designated as input 60 that receive information from the various sensors, such as the viscosity sensor, the pH sensor, the weighing sensor 18, the temperature sensor, among other possible sensors that the electronic controller 20 may be using. The interfaces forming the input 60 are of a known construction and will not be described in detail.

To enable the electronic controller 20 to regulate the polymerization reaction in the reaction vessel 12 as described earlier, it is provided with a plurality of interfaces, collectively designated as output 62, that issue control signals to valves or other controllable components of the apparatus 10, such as to allow controlled amounts of different materials to be discharged in the reaction vessel 12, activate or deactivate the heating system 21 and the cooling system 23, activate or deactivate the mixing device 16 and the finished product discharge valve or pump. As in the case of the interfaces forming the input 60, the interfaces forming the output 62 are of known construction and do not need to be described in detail.

The program element that is executed by the CPU 50 can be loaded in the electronic controller 20 in various different ways. One possibility is to store the program element on any suitable storage medium such as a diskette or a CD-ROM that can be read by the electronic controller 20 to transfer the program element to the memory 52. Alternatively, the program element can be uploaded via the communication interface 58 into the memory 52 from the remote entity.

Figure 4 is a diagram of a system 69 suitable for manufacturing a polymer on the basis of product selection information input by a customer. The system includes a client system 70 that can be a simple personal computer or any other electronic device allowing a user to communicate with a remote entity 72 such as a server. The communication between the client system 70 and the remote entity 72 can be established over any suitable network, such as the public Internet, for example. Different types of communication protocols can be used without departing from the spirit of the invention.

The system 69 allows the user to select a polymer he or she desires to buy and place a purchase order for the product. Advantageously, the system is implemented with Web based interfaces, although other possibilities exist without departing from the spirit of the invention.

In use, the user would be presented with a suitable welcome screen with optional login information. Assuming that the login procedure is completed, the server 72 will cause the client system 70 to display a prompt requesting from the user to enter polymer selection information. Many different types of prompts can be used. One possible example is a menu that provides the user with the available choices and he or she will highlight the desired one. Alternatively, the polymer selection information entered by the user may be in the form of a product formulation, such as the various constituent elements and their proportions for manufacturing the polymer. Another possibility is to allow the user to specify desired properties of the polymer, either physical properties or chemical properties. Yet another possibility is to specify the intended application for the polymer.

In most cases the user will also be prompted to enter information about the quantity of the product to be purchased.

When the product selection information and the quantity information are transmitted to the remote entity 72, the latter will conduct a validation of the purchase order to detect any invalid selection and will issue an acknowledgement sent to the client system 70 which will cause the client system 70 to display on the screen information confirming to the user that the purchase order has been received.

Optionally, the remote entity 72 can then send to the client system 70 pricing information to indicate to the user the cost of the purchase. Another possible refinement is to allow the user at the client system 70 to make an on-line payment for the purchase order by interacting with the remote entity 72. Yet another possibility is to configure the remote server 72 to send to the client system 70 information about the expected date of production, shipment or delivery of the product to the user.

When the purchase order has been received by the remote entity 72, the information validated and payment completed, if the system 69 is so configured, the remote entity 72 will search an inventory database that contains information on the different types of polymers and respective quantities that are presently in storage. If the type of polymer desired by the user is available in the quantity he or she desires, the remote server 72 can issue a shipping order such that the product can be shipped to the user. Otherwise, the remote server 72 will issue control information derived from the polymer selection information to direct an apparatus to manufacture the selected polymer at a manufacturing facility 74 to automatically produce the desired product. The apparatus can be the same as the apparatus 10 described earlier in this specification. Once the apparatus 10 receives the control information it will run the process to produce the desired product in the desired quantity. At this point the product can be shipped to the user.

Although various embodiments have been illustrated, this was for the purpose of describing, but not limiting, the invention. Various modifications will become apparent to those skilled in the art and are within the scope of this invention, which is defined more particularly by the attached claims.

## Claims

1. A process for producing a polymer, comprising:
a) delivering at least two reactants in a reaction vessel capable to interact and produce a polymerizing mixture;
b) observing the pH of material in the reaction vessel;
c) monitoring the viscosity of said polymerizing mixture to regulate the rate of polymerization of said polymerizing mixture.

2. A process as defined in claim 1, including observing the pH before said at least two reactants interact to produce said polymerizing mixture.

3. A process for producing a polymer as defined in claim 2, including forming a first mixture in the reaction vessel containing a first of said at least two reactants and observing the pH of said first mixture.

4. A process for producing a polymer as defined in claim 3, including altering the pH of said first mixture if the observing of the pH of said first mixture indicates that the pH of said first mixture is outside a known range.

5. A process for producing a polymer as defined in claim 4, including adding to said first mixture a pH modifying agent to alter the pH of said first mixture.

6. A process as defined in claim 1, including observing the pH of said polymerizing mixture.

7. A process for producing a polymer as defined in claim 6, including altering the pH of said polymerizing mixture if the observing of the pH of said polymerizing mixture indicates that the pH of said polymerizing mixture is outside a known range.

8. A process for producing a polymer as defined in claim 7, including adding to said polymerizing mixture a pH modifying agent to alter the pH of said polymerizing mixture.

9. A process for producing a polymer as defined in claim 2, wherein said regulating includes implementing a regulating action to alter a rate of polymerization of said polymerizing mixture.

10. A process for producing a polymer as defined in claim 9, wherein said regulating action reduces a rate of polymerization of said polymerizing mixture.

11. A process for producing a polymer as defined in claim 10, wherein said regulating action includes adding an inhibitor to said polymerizing mixture for reducing the rate of polymerization of said polymerizing mixture.

12. A process for producing a polymer as defined in claim 10, wherein said regulating action includes cooling said polymerizing mixture for reducing the rate of polymerization of said polymerizing mixture.

13. A process for producing a polymer as defined in claim 9, wherein said regulating action increases a rate of polymerization of said polymerizing mixture.

14. A process for producing a polymer as defined in claim 2, including initiating said regulating action when the viscosity of said polymerizing mixture reaches a known value.

15. A process for producing a polymer as defined in claim 14, wherein said regulating action is a first regulating action and said known value is a first known value, said process including implementing a second regulating action when the viscosity of said polymerizing mixture reaches a second known value.

16. A process for producing a polymer as defined in claim 15, wherein said second regulating action reduces a rate of polymerization of said polymerizing mixture.

17. A process for producing a polymer as defined in claim 16, wherein said second regulating action includes adding an inhibitor to said polymerizing mixture for reducing the rate of polymerization of said polymerizing mixture.

18. A process as defined in claim 2, wherein said polymer is a liquid binder.

19. A process for producing a polymer as defined in claim 18, wherein a first of said at least two reactants includes glyoxal formaldehyde.

20. A process for producing a polymer as defined in claim 19, wherein a second of said at least two reactants includes polyacrylamide.

21. The liquid binder produced by the process of claim 18.

22. An apparatus for producing a polymer, comprising:
a) a reaction vessel for receiving at least two reactants capable to interact and produce a polymerizing mixture;
b) an electronic controller, operative for:
i) observing the pH of material in said reaction vessel;
ii) monitoring the viscosity of the polymerizing mixture;
iii) regulating a rate of polymerization of the polymerizing mixture at least in part on a basis of said monitoring.

23. An apparatus for producing a polymer as defined in claim 22, comprising a sensor for producing a signal conveying viscosity information indicative of a viscosity of the polymerizing mixture, in communication with said controller for communicating to said controller the viscosity information.

24. An apparatus for producing a polymer as defined in claim 23, comprising a sensor for producing a signal conveying pH information indicative of the pH of material in said reaction vessel, in communication with said controller for communicating to said controller the pH information.

25. An apparatus for producing a polymer as defined in claim 24, wherein said electronic controller is operative to determine if the pH of the material is within a known pH range.

26. An apparatus for producing a polymer as defined in claim 25, including a delivery system for a pH increasing agent, said electronic controller being operative to cause said delivery system for a pH increasing agent to dispense a controlled amount of the pH increasing agent in said reaction vessel to increase the pH of the material in said reaction vessel.

27. An apparatus for producing a polymer as defined in claim 26, including a delivery system for a pH decreasing agent, said electronic controller being operative to cause said delivery system for a pH decreasing agent to dispense a controlled amount of the pH decreasing agent in said reaction vessel to decrease the pH of the material in said reaction vessel.

28. An apparatus for producing a polymer as defined in claim 23, wherein said regulating includes implementing a regulating action to alter a rate of polymerization of said polymerizing mixture.

29. An apparatus for producing a polymer as defined in claim 28, wherein said regulating action reduces a rate of polymerization of said polymerizing mixture.

30. An apparatus for producing a polymer as defined in claim 29, including an inhibitor delivery system, said electronic controller being operative as part of said regulating action to cause said inhibitor delivery system to dispense a controlled amount of inhibitor to the polymerizing mixture for reducing the rate of polymerization of the polymerizing mixture.

31. An apparatus for producing a polymer as defined in claim 29, wherein said regulating action includes cooling the polymerizing mixture for reducing the rate of polymerization of the polymerizing mixture.

32. An apparatus for producing a polymer as defined in claim 29, wherein said regulating action increases a rate of polymerization of the polymerizing mixture.

33. An apparatus for producing a polymer as defined in claim 29, wherein said electronic controller initiates said regulating action when the viscosity information indicates that the viscosity of the polymerizing mixture reaches a known value.

34. An apparatus for producing a polymer as defined in claim 33, wherein said regulating action is a first regulating action and said known value is a first known value, said electronic controller implementing a second regulating action when the viscosity information indicates that the viscosity of the polymerizing mixture reaches a second known value.

35. An apparatus for producing a polymer as defined in claim 34, wherein said second regulating action reduces a rate of polymerization of said polymerizing mixture.

36. An apparatus for producing a polymer as defined in claim 35, wherein said electronic controller is operative to cause said inhibitor delivery system to deliver an inhibitor to the polymerizing mixture for reducing the rate of polymerization of the polymerizing mixture.

37. An apparatus for producing a polymer as defined in claim 29, wherein said said polymer is a liquid binder.

38. An electronic controller for controlling a polymerization reaction in a reaction vessel, comprising:
a) an input for receiving:
i) a signal conveying viscosity information indicative of a viscosity of a polymerizing mixture in a reaction vessel;
ii) a signal conveying pH information indicative of a pH of a material in the reaction vessel;
b) a processing unit in communication with said input for processing the viscosity information to determine if a rate of polymerization of the polymerizing mixture should be altered;
c) an output in communication with said processing unit for releasing a signal for causing a regulation action to alter the rate of polymerization of the polymerizing mixture.

39. An electronic controller as defined in claim 38, wherein said electronic controller is operative to determine if the pH of the material is within a known pH range.

40. An electronic controller as defined in claim 39, operative to release a signal via said output for causing a delivery system for a pH increasing agent to dispense a controlled amount of the pH increasing agent in the reaction vessel to increase the pH of the material in the reaction vessel.

41. An electronic controller as defined in claim 39, operative to release a signal via said output for causing a delivery system for a pH decreasing agent to dispense a controlled amount of the pH decreasing agent in the reaction vessel to decrease the pH of the material in the reaction vessel.

42. An electronic controller as defined in claim 39, wherein said regulating action reduces a rate of polymerization of said polymerizing mixture.

43. An electronic controller as defined in claim 42, including an inhibitor delivery system, said electronic controller being operative to release a signal at said output for causing au inhibitor delivery system to dispense a controlled amount of inhibitor to the polymerizing mixture for reducing the rate of polymerization of the polymerizing mixture.

44. An electronic controller as defined in claim 43, wherein said electronic controller initiates said regulating action when the viscosity information indicates that the viscosity of the polymerizing mixture reaches a known value.

45. An electronic controller as defined in claim 44, wherein said regulating action is a first regulating action and said known value is a first known value, said electronic controller implementing a second regulating action when the viscosity information indicates that the viscosity of the polymerizing mixture reaches a second known value.

46. An electronic controller as defined in claim 45, wherein said second regulating action reduces a rate of polymerization of said polymerizing mixture.

47. Computer readable storage medium containing a program element for execution by a computing apparatus having a processing unit in communication with an input and with an output, the computing apparatus when executing said program element operative to:
i) receive viscosity information indicative of a viscosity of a polymerizing mixture in a reaction vessel;
ii) receive pH information indicative of a pH of a material in the reaction vessel;
iii) processing the viscosity information to determine if a rate of polymerization of the polymerizing mixture should be altered.

48. Method for manufacturing a polymer on a basis of product selection information input by a customer, said method comprising:
a) displaying on a client system information prompting a user to enter at the client system a purchase order, the purchase order including product selection information indicative of a polymer the user desires to purchase;
b) electronically transmitting the polymer selection information to a server remotely located from the client system;
c) electronically supplying to an automated polymer manufacturing apparatus control information derived from the product selection information to direct the apparatus to manufacture a controlled amount of the polymer the user desires to purchase by mixing at least two reactants to form a polymerizing mixture.

49. Method as defined in claim 48, wherein the purchase order includes quantity information indicative of the quantity of the polymer the user desires to purchase.

50. Method as defined in claim 49, wherein the control information is derived from the product selection information and from the quantity information and directs the apparatus to manufacture the polymer the user desires to purchase in at least a quantity that matches the quantity of the polymer the user desires to purchase.

51. Method as defined in claim 49, wherein the method comprises electronically searching an inventory database to determine if the quantity of polymer the user desires to purchase is currently in stock and:
a) in the affirmative delivering the quantity of polymer the user desires to purchase to the user;
b) in the negative electronically supplying the control information to the automated polymer manufacturing apparatus via a communication link to direct the apparatus to manufacture the polymer the user desires to purchase in at least a quantity that matches the quantity the user desires to purchase.

52. Method as defined in claim 51, including electronically transmitting an acknowledgement from the server to the client system causing the client system to display to the user information confirming that the purchase order has been received by the server.

53. Method as defined in claim 51, including electronically transmitting information from the server to the client system causing the client system to display to the user pricing information regarding the purchase order.

54. Method as defined in claim 51, including electronically transmitting information from the server to the client system causing the client system to display to the user information regarding an expected date of delivery of the selected polymer.

55. Method as defined in claim 51, wherein the selected polymer is a liquid binder.
